# FASCICULE DE BREVET EUROPEEN

(11) **EP 0 461 451 B1**
(45) Date de publication et mention de la délivrance du brevet: **29.03.1995**
(21) Numéro de dépôt: 91108559.5
(22) Date de dépôt: 27.05.1991
(51) Int. Cl.: H04Q 7/20, H04Q 7/24, H04Q 7/38

(54) **Procédé d'acheminement d'un appel vers un abonné à un service de téléphonie sans fil**
Verfahren zur Anrufsvermittlung für einen Teilnehmer eines schnurlosen Telefondienstes
Method of call routing to a cordless telephone service subscriber

(30) Priorité: 30.05.1990 FR 9006708
(43) Date de publication de la demande: 18.12.1991
(73) Titulaire: ALCATEL CIT, 75008 Paris (FR)
(72) Inventeur: Kerihuel, Jean-Bernard, F-75015 Paris (FR); Martin, Maurice, F-75013 Paris (FR)
(74) Mandataire: Weinmiller, Jürgen

(56) Documents cités:
- EP-A- 0 212 761
- EP-A- 0 260 763
- GB-A- 2 193 861
- TELCOM REPORT vol. 12, no. 5, 1989, München (DE) pages 142 - 145; H. AUSPURG: 'Intelligente Netze beschleunigen Einführung neuer Dienste'
- COMMUTATION ET TRANSMISSION no. 2, 1989, PARIS (FR) pages 5 - 22; J. DUNOGUE ET AL: 'DU CONCEPT A L'APPLICATION DU RESEAU INTELLIGENT Architecture et équipements d'Alcatel '
- PATENT ABSTRACTS OF JAPAN vol. 10, no. 386 (E-467)(2443) 24 Décembre 1986 & JP-A-61 177 830 (NEC CORP. ) 9 Août 1986

## Description

L'invention concerne un procédé d'acheminement d'un appel vers un abonné à un service de téléphonie sans fil. Un tel réseau comporte une pluralité de bornes fixes qui permettent à des abonnés d'établir des communications téléphoniques avec un réseau public commuté, au moyen de postes téléphoniques portables qui communiquent avec les bornes par des canaux radio. La portée des bornes est courte, et il n'y a pas de transfert automatique d'une communication, d'une borne à une autre.

Pour établir une communication, un abonné doit venir à proximité de l'une des bornes fixes, dans un rayon de l'ordre de 100 ou 200 mètres, par contre un abonné ne peut pas recevoir d'appel. Les réseaux connus ne permettent pas l'acheminement d'un appel vers un abonné, car il n'y a pas de procédé connu pour déterminer quelle borne est située à proximité d'un abonné donné, à un instant donné. Pour remédier à cet inconvénient, il est connu de combiner un téléphone sans fil, classique, avec un récepteur de radio-messagerie comportant un affichage alphanumérique permettant d'indiquer à l'abonné un numéro de téléphone qu'il doit appeler pour établir la communication souhaitée. Ce procédé a pour inconvénient d'être peu pratique pour le demandeur et, d'autre part, d'être coûteux car il utilise deux réseaux de télécommunication : le réseau de radiomessagerie et le réseau de téléphonie sans fil.

Un premier but de l'invention est de proposer un procédé qui n'utilise pas un réseau de radio-messagerie, et qui ne nécessite pas que l'abonné établisse lui-même la communication pour acheminer un appel vers cet abonné, dans la mesure où il existe une borne à proximité de l'abonné. Un second but de l'invention est de proposer un procédé permettant à un abonné de se déplacer à l'intérieur d'une zone connue à l'avance et couverte par plusieurs autres bornes, sans qu'il ait à se soucier de signaler ses déplacements à l'intérieur de cette zone. Un troisième but de l'invention est de proposer un procédé permettant à un abonné d'aller dans une autre zone, non connue à l'avance, en conservant la possibilité de recevoir des appels téléphoniques, s'il prend soin de signaler sa présence dans cette zone, par une procédure simple. Un quatrième but de l'invention est de proposer un procédé permettant à l'abonné qui s'est déplacé provisoirement dans une zone non connue à l'avance, de limiter la durée pendant laquelle les appels sont acheminés vers cette autre zone, de telle sorte que les appels sont ensuite acheminés automatiquement vers une borne qui est habituellement la plus proche de lui et, subsidiairement, vers d'autres bornes couvrant une zone connue à l'avance où l'abonné est situé occasionnellement. Un cinquième but de l'invention est de proposer un procédé permettant à l'exploitant du réseau de téléphonie sans fil de limiter automatiquement la durée pendant laquelle les appels sont acheminés vers une zone différente de la zone dans laquelle est situé habituellement un abonné, afin d'éviter que des appels soient systématiquement acheminés vers une zone où l'abonné ne répond jamais parce qu'il a quitté cette zone en négligeant de réaliser la procédure permettant au réseau de savoir où il est situé.

L'invention concerne plus particulièrement un service de téléphonie sans fil assuré par un réseau dit intelligent comme décrit dans le document "TELCOM REPORT, vol.12, No. 5, 1989, München, DE, pages 142 à 145, H. Auspurg: "Intelligente Netze beschleunigen Einführung neuer Dienste", qui sera décrit plus loin.

Selon l'invention, un procédé d'acheminement d'un appel vers un abonné à un service de téléphonie sans fil, ce service étant assuré par un réseau comportant :
- un réseau de distribution constitué par des bornes fixes et des téléphones numériques, sans fil, reliés par radio aux bornes;
- un réseau public commuté numérique, à intégration de services, chaque borne lui étant reliée notamment par un canal de signalisation d'usager à usager;
- des points de commande de service réseau, reliés au réseau commuté et comportant chacun une base de données d'abonnés au service de téléphonie sans fil, et un dispositif logique de traitement d'appels;
- un point de commande de service gestion comportant une base de données de référence;

est caractérisé en ce qu'il consiste, pour chaque abonné bénéficiant de l'acheminement des appels vers lui, à :
- lui affecter un numéro du plan de numérotation du réseau public;
- déterminer un numéro appelé numéro de la borne la plus proche, désignant une borne qui est censée être la plus proche de l'abonné;
- inscrire le numéro de la borne la plus proche dans la base de données du point de commande de service réseau desservant ledit abonné, en l'associant au numéro du plan de numérotation, et à un mot identifiant le téléphone dudit abonné;

et en ce que pour chaque appel à acheminer vers un abonné demandé, il consiste à :
- lire dans la base de données du point de commande de service réseau desservant ledit abonné, le numéro de la borne la plus proche, et le mot identifiant le téléphone dudit abonné;
- envoyer ce mot dudit point de commande de service réseau à la borne désignée par le numéro de borne la plus proche, par le canal de signalisation d'usager à usager de ladite borne; puis relâcher cette liaison;
- émettre par ladite borne au moins un message d'appel contenant ce mot et le numéro de ladite borne;
- recevoir le message d'appel dans le téléphone de l'abonné, reconnaître le mot identifiant le téléphone, et alerter l'abonné;
- établir une liaison entre l'abonné et ladite borne, en envoyant du téléphone de l'abonné vers ladite borne, un message de réponse contenant le mot identifiant le téléphone, et contenant le numéro de ladite borne.

Le procédé ainsi caractérisé permet d'acheminer automatiquement un appel vers un abonné parce que la borne la plus proche de cet abonné a été déterminée auparavant et qu'un numéro désignant cette borne a été inscrit dans la base de données du point de commande de service réseau, en l'associant au numéro du plan de numérotation et à un mot identifiant le téléphone dudit abonné. Ceci permet d'accéder à ce numéro de borne en utilisant comme clé le numéro de l'abonné dans le plan de numérotation. Une liaison entre cette borne et l'abonné peut être établie sans ambiguïté sur l'identité du téléphone qui répond et sans ambiguïté sur l'identité de la borne qui capte cette réponse, parce que la borne émet un message d'appel contenant : le mot identifiant le téléphone, qui correspond à un seul téléphone; et le numéro identifiant la borne. Seul répond le téléphone correspondant à ce mot, et la seule borne qui réagit à cette réponse est celle désignée par le numéro de borne contenu dans le message de réponse du téléphone.

Selon une autre caractéristique, le procédé consiste en outre, à déterminer, puis écrire dans la base de données du point de commande de service réseau desservant ledit abonné, au moins un autre numéro dit numéro de borne subsidiaire désignant une borne qui est susceptible d'être proche dudit abonné lorsqu'il n'est pas à proximité de la borne qui est censée être la plus proche, s'il existe une telle borne subsidiaire;
et, si l'abonné demandé ne répond pas à des messages d'appel émis par la borne désignée par le numéro de borne la plus proche, il consiste en outre à :
- lire dans la base de données dudit point de commande de service réseau, chaque numéro de borne subsidiaire;
- envoyer le mot identifiant le téléphone de l'abonné, dudit point de commande de service réseau à chaque borne subsidiaire, par le canal de signalisation d'usager à usager reliant cette borne au réseau;
- émettre par chacune des bornes subsidiaires parallèlement, au moins un message d'appel contenant le mot identifiant le téléphone, et le numéro de la borne émettant le message.

Le procédé ainsi caractérisé permet à l'abonné se déplacer à l'intérieur d'une zone couverte par plusieurs bornes, sans avoir à exécuter la moindre procédure pour informer le réseau de ces déplacements à l'intérieur de cette zone, parce que le numéro de la borne la plus proche et les numéros des bornes subsidiaires ont été déterminés auparavant, et mémorisés.

Selon une autre caractéristique, pour déterminer le numéro de la borne la plus proche et au moins un numéro de borne subsidiaire, le procédé consiste à faire déterminer un numéro dit numéro contractuel de borne la plus proche, et au moins un numéro dit numéro contractuel de borne subsidiaire, par l'exploitant du réseau de téléphonie sans fil, moment où l'abonné souscrit son contrat d'abonnement.

Le procédé ainsi caractérisé permet de déterminer de manière très simple, mais difficilement modifiable, le numéro de la borne près de laquelle l'abonné est habituellement situé, ainsi que les numéros des bornes subsidiaires près desquelles il peut se déplacer occasionnellement. Les bornes subsidiaires contractuelles sont généralement des bornes voisines de la borne la plus proche, contractuelle, mais ce n'est pas une obligation. Un abonné peut déclarer qu'il est habituellement près d'une borne desservant son lieu de travail, et que, en dehors des heures de travail, il est situé près d'une borne desservant son domicile, à une distance quelconque de son lieu de travail. Les numéros des bornes sont faciles à déterminer par l'exploitant, soit en regardant le plan d'implantation des bornes, soit au moyen d'une table répertoriant toutes les bornes par zone géographique.

Selon une autre caractéristique, pour déterminer le numéro de la borne la plus proche, et au moins un numéro de borne subsidiaire si une telle borne subsidiaire existe, après un déplacement dudit abonné vers une zone non connue à l'avance et couverte par une ou plusieurs bornes, le procédé consiste à :
- envoyer du téléphone dudit abonné vers le point de commande de service réseau desservant cet abonné, par l'intermédiaire d'une borne située à proximité de l'abonné, un message demandant la détermination d'un numéro dit numéro provisoire de la borne la plus proche, et d'au moins un numéro dit numéro provisoire de borne subsidiaire, s'il en existe;
- adjoindre à ce message, au moment où il transite par la borne, un numéro désignant cette borne;
- authentifier le téléphone ayant émis ledit message;
- écrire le numéro de ladite borne, dans la base de données dudit point de commande de service réseau, en l'associant au numéro du plan de numérotation et au mot désignant le téléphone, pour constituer un numéro provisoire de la borne la plus proche;
- déterminer, par une lecture dans une table de la base de données dudit point de commande de service réseau, au moins un numéro désignant une borne voisine de la borne désigné par le numéro provisoire de la borne la plus proche;
- écrire dans la base de données dudit point de commande de service réseau, chaque numéro lu dans la table, en l'associant au numéro du plan de numérotation et au mot désignant le téléphone, chaque numéro lu constituant un numéro provisoire de borne subsidiaire;
- prédéterminer, puis écrire dans la base de données dudit point de commande de service réseau, une date et une heure de fin de validité des numéros provisoires, en les associant au numéro du plan de numérotation, et au mot désignant le téléphone.

Pour lire le numéro de la borne la plus proche, il consiste à :
- lire le numéro contractuel et le numéro provisoire de la borne la plus proche; et lire la date et l'heure de fin de validité;
- prendre pour numéro de borne la plus proche, le numéro provisoire de la borne la plus proche, si la date et l'heure de fin de validité ne sont pas dépassés; sinon prendre le numéro contractuel;

pour lire chaque numéro de borne subsidiaire, il consiste à :
- lire le numéro contractuel et le numéro provisoire de borne subsidiaire; et lire la date et l'heure de fin de validité;
- prendre pour numéro de borne subsdiaire, chaque numéro provisoire de borne subsidiaire, si la date et l'heure de fin de validité ne sont pas dépassées, sinon prendre chaque numéro provisoire.

Le procédé ainsi caractérisé permet à un abonné d'aller temporairement dans une zone non connue à l'avance, qui est desservie par une ou plusieurs bornes autres que les bornes déterminées dans son contrat d'abonnement, moyennant l'éxécution d'une procédure de localisation permettant de déterminer un numéro provisoire de borne la plus proche et éventuellement un ou plusieurs numéros provisoires de bornes subsidiaires. La détermination des bornes subsidiaires étant réalisée automatiquement, par lecture d'une table, les bornes subsidiaires provisoires sont toujours des bornes voisines de la borne provisoirement la plus proche. L'abonné ne peut pas influer sur leur détermination.

La fixation d'une date et d'une heure de fin de validité de ces numéros provisoires permet de restaurer automatiquement les numéros contractuels comme numéro de la borne la plus proche et comme numéros de bornes subsidiaires sans que l'abonné, ni l'exploitant du réseau, n'aient à agir au moment où l'abonné retourne dans sa zone habituelle. L'abonné peut ainsi retourner dans sa zone habituelle sans devoir penser à réaliser une procédure particulière pour en informer le réseau. De son côté, l'exploitant du réseau est garanti contre une mauvaise utilisation du réseau consistant à acheminer vainement des appels vers une zone où l'abonné n'est plus présent parce qu'il est retourné dans sa zone habituelle. Il est prévu deux variantes pour prédéterminer un délais de validité.

Selon une première variante, le procédé consiste à :
- saisir un délai au moyen du clavier de numérotation équipant le téléphone de l'abonné, après avoir demandé la détermination des numéros provisoires de bornes;
- transmettre ce délai, du téléphone de l'abonné audit point de commande de service réseau;
- calculer la date et l'heure de la fin de validité des numéros provisoires, en fonction de ce délai.

Le procédé ainsi caractérisé permet à l'abonné, dans un même message, de demander au réseau sa localisation provisoire et de fixer lui-même un délai de validité des numéros provisoires de bornes. Ceci permet d'exploiter le fait que l'abonné sait généralement dans quel délai il va retourner dans sa zone habituelle. Le point de commande de service réseau détermine la date et l'heure correspondant à la fin de ce délai, puis l'inscrit dans sa base de données en les associant au numéro du plan de numérotation et au mot désignant l'abonnement, de telle sorte que lorsqu'un appel est à acheminer, le point de commande de service réseau lit simultanément : les numéros contractuels, les numéros provisoires, la date, et l'heure de fin de validité, dans un enregistrement accessible par le numéro du plan de numérotation. Le point de commande de service réseau compare la date et l'heure de la fin de validité, à la date et à l'heure où l'appel est à acheminer. Si la date et l'heure de validité ne sont pas dépassées, il utilise les numéros provisoires de bornes, sinon il utilise les numéros contractuels de bornes.

Selon une seconde variante, pour prédéterminer la date et l'heure de la fin de validité des numéros provisoires de bornes, le procédé consiste à:
- à fixer un délai de validité uniforme pour tous les abonnements;
- calculer la date et l'heure de fin de validité des numéros provisoires de bornes pour chaque abonnement en fonction de ce délai uniforme et en fonction de l'instant où sont déterminés lesdits numéros provisoires pour cet abonnement.

Ces deux variantes peuvent être mises en oeuvre simultanément pour fixer un délai par défaut, pour le cas où l'abonné oublie ou ne souhaite pas fixer lui-même un délai. Si l'abonné demande la détermination de numéros provisoires de bornes mais ne saisit pas un délai de validité sur son clavier de numérotation, le point de commande de service réseau détermine automatiquement une date et une heure de fin de validité en fonction du délai uniforme fixé par l'exploitant; et il les inscrit dans sa base de données.

L'invention sera mieux comprise et d'autres détails apparaîtront à l'aide de la description ci-dessous et des figures l'accompagnant :
- la figure 1 représente le schéma synoptique d'un exemple de réalisation d'un réseau de téléphonie sans fil, à structure de réseau intelligent, permettant la mise en oeuvre du procédé selon l'invention;
- La figure 2 représente schématiquement plusieurs zones desservies par des grappes de bornes distinctes;
- la figure 3 représente un diagramme temporel illustrant un exemple de mise en oeuvre du procédé selon l'invention, et plus particulièrement l'étape consistant à déterminer le numéro provisoire de la borne la plus proche d'un abonné;
- la figure 4 représente un diagramme temporel illustrant un exemple de mise en oeuvre du procédé selon l'invention pour acheminer un appel vers un abonné qui se trouve à proximité de la borne désignée par le numéro de la borne la plus proche;
- la figure 5 représente un diagramme temporel illustrant un exemple de mise en oeuvre du procédé selon l'invention pour acheminer un appel vers un abonné qui est situé à proximité de l'une des bornes subsidiaires.

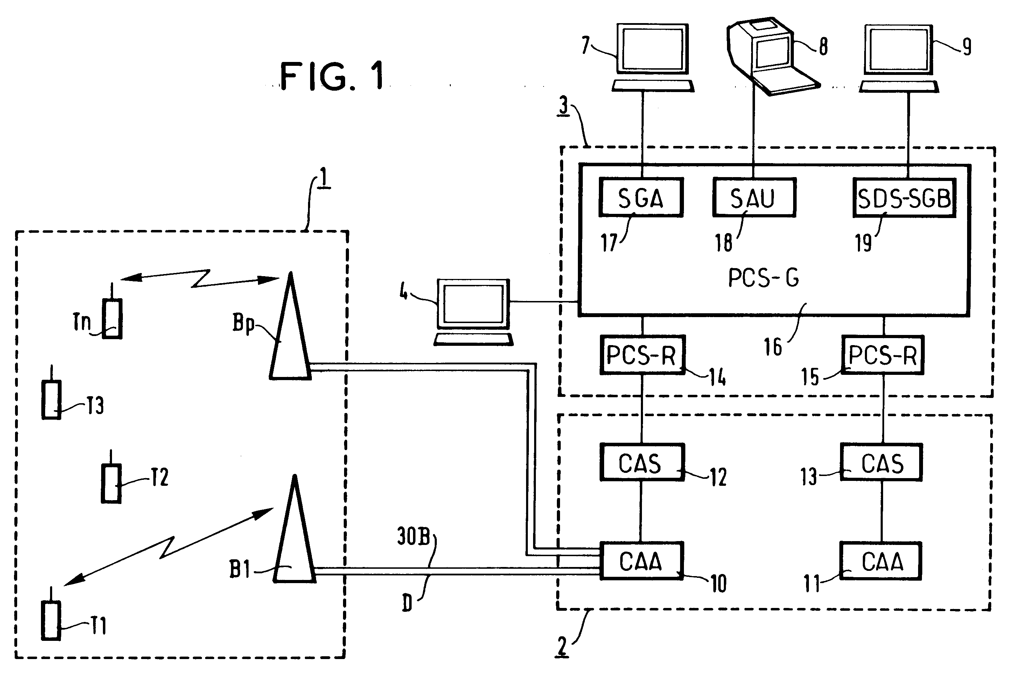

La figure 1 représente le schéma synoptique d'un exemple de réseau intelligent de téléphonie sans fil, permettant la mise en oeuvre du procédé selon l'invention. Il comporte : un réseau de distribution 1; un réseau public commuté 2, numérique, à intégration de services ; un réseau de points de commande de service, 3; et des unités d'exploitation 4, 7, 8, 9.

Le réseau de distribution 1 comprend des téléphones numériques portatifs, sans fil, T1,...,Tn, et des bornes fixes B1,...,Bp. Chaque téléphone peut être relié par radio à une borne située à proximité de ce téléphone, chaque borne pouvant desservir simultanément plusieurs téléphones. Chaque borne B1,...,Bp est reliée au réseau public commuté 2 par des accès normalisés 5. Chaque accès au réseau 2, comporte un canal de signalisation d'usager à usager, noté D, et plusieurs canaux téléphoniques, notés B. Le nombre de canaux téléphoniques peut être égal à deux, pour un accès de base, et égal à trente pour un accès primaire. Ces canaux téléphoniques sont bidirectionnels et sont établis en mode circuit. Le canal de signalisation d'usager à usager est un canal bidirectionnel exploité en mode message. Il permet de transmettre des données parallèlement aux conversations téléphoniques. L'une de ses applications classiques consiste à transmettre le numéro de téléphone ou le nom du demandeur jusqu'à un afficheur situé sur le terminal téléphonique de la personne demandée.

Le réseau public commuté 2, est constitué de centres à autonomie d'acheminement (CAA) et de centres d'accès au service (CAS). Cet exemple de réseau comporte deux centres à autonomie d'acheminement, 10 et 11, reliés respectivement à deux centres d'accès au service, 12 et 13, par des liaisons conformes au protocole n° 7 du CCITT. Dans cet exemple, les bornes B1,...,Bp sont reliées au centre à autonomie d'acheminement 10.

Le réseau 3 de points de commande de service comporte, dans cet exemple, deux points de commande de service réseau (PCS-R) 14 et 15; un point de commande de service gestion (PCS-G) 16. Les points de commande de service réseau 14 et 15 sont reliés respectivement aux centres d'accès au service, 12 et 13, par des liaisons conformes au protocole n°7 du CCITT; et sont reliés au point de commande de service gestion 16 par des liaisons conformes au protocole X25 du CCITT. Chaque unité d'exploitation 4, 7, 8, 9 est constituée essentiellement d'un terminal écran-clavier. Les terminaux sont affectés à différentes équipes d'exploitation, le point de commande de service gestion 16 fournissant à chaque équipe les informations et les moyens de dialogue.

Le terminal 4 est affecté à l'exploitant technique du réseau intelligent. Le terminal 9 est affecté à un exploitant technique de l'ensemble des bornes ou d'un parc de bornes particulier. C'est un terminal ASCII ou un terminal videotex. Il accède à la base de données du point de commande de service gestion 16, par un serveur de gestion de bornes (SGB) et par un serveur de statistiques (SDS), 19. Le terminal 8 est un terminal vidéotex, permettant à un abonné de consulter des données de son service : données d'abonnement et tickets de facturation. Il accède au point de commande de service gestion 16 par un serveur d'accès d'usagers (SAU) 18. Le terminal 7 est un terminal videotex affecté à l'exploitant commercial du service de téléphonie sans fil. Il accède au point de commande de service gestion 16 par un serveur de gestion d'abonnés (SGA) 17.

Chaque borne B1,...,Bp comporte un contrôleur qui supervise des interfaces de raccordement : au réseau 2, par les accès normalisés 5; et aux canaux radio. Le contrôleur assure notamment les fonctions suivantes :
- initialisation d'un appel vers le réseau lors de la prise d'un canal radio par un téléphone T1,...,Tn;
- participation à la procédure d'authentification d'un demandeur;
- analyse des informations reçues sur les canaux radio;
- supervision des canaux radio;

Un appel d'un utilisateur du réseau public 2, pour un service, est analysé dans l'un des commutateurs d'accès au service 12 ou 13, puis est transmis au point de commande de service réseau, 14 ou 15, desservant ce commutateur. Ce point de commande de service réseau pilote alors l'ensemble du traitement d'appel et commande le commutateur d'accès au service pour toutes tes actions nécessitant des ressources de commutation. Par exemple : pour l'envoi d'une annonce vocale, ou pour établir une connexion entre une entrée du réseau et une sortie du réseau, ou pour réaliser une temporisation. Pour traiter chaque appel, un point de commande de service réseau dispose d'un logiciel pour chaque service, organisé sous forme d'enchaînement d'actions élémentaires, en fonction de messages reçus. Il dispose en outre d'une base de données accessible en temps réel.

Le point de commande de service gestion 16 n'est pas concerné par le traitement d'appels. Par contre, il constitue une référence pour le service car il comporte une base de données contenant les logiciels du service et contenant les données concernant les abonnés. Il assure l'exploitation technique du réseau de points de commande de service réseau, 14 et 15, notamment en maintenant la cohérence des bases de données; et il assure l'exploitation commerciale du service : gestion des contrats, accès de l'exploitant, accès des abonnés.

Les points de commande 14 à 16 peuvent être constitués par exemple d'un multiprocesseur ALCATEL8300, commercialisé par la société ALCATEL.

Les points de commande de service réseau, 14 et 15, sont utilisés pour mettre en oeuvre le procédé d'acheminement d'un appel vers un abonné au service de téléphonie sans fil. Chacun comporte une base de données d'abonnés au service de téléphonie sans fil. Cette base contient des données correspondant à une partie des abonnés ou à tous les abonnés au service. La mise à jour de cette base de données est faite par le point de commande de service gestion 16, quasi-simultanément dans toutes les bases de données des points de commande de service réseau, 14 et 15, dès que le point de commande de service gestion 16 est informé d'une modification relative aux abonnés, par l'intermédiaire du centre d'exploitation 7.

La base de données des points de commande de service, 14 et 15, contient pour un abonné, notamment :
- un mot IDAB désignant l'abonnement;
- un mot IDCP désignant le téléphone dont l'abonné est titulaire;
- une clé secrète Ki propre à cet abonné;
- un mot IDSO désignant le service et l'opérateur du service objet de l'abonnement;
- le type d'abonnement : international, autorisant tous les appels; ou national, autorisant les appels dans un seul pays; ou sélection, autorisant une liste de numéros prédéterminés; donnant le droit de recevoir des appels par une seule borne, ou une grappe de bornes; ou par deux grappes de bornes dont l'une n'est pas connue à l'avance;
- les numéros dont l'accès est autorisé à cet abonné;
- la date de fin de validité de l'abonnement;
- le numéro du plan de numérotation, permettant d'appeler l'abonné par son téléphone sans fil;
- le numéro contractuel de la borne ta plus proche de l'abonné;
- les numéros contractuels des bornes subsidiaire s'il en existe, et si l'abonné a souscrit un supplément d'abonnement pour avoir le droit de recevoir des appels par des bornes autres que de ta borne la plus proche, déterminées à l'avance dans le contrat d'abonnement;
- le numéro provisoire de la borne la plus proche de l'abonné, si l'abonné a signalé une nouvelle localisation et s'il a souscrit un supplément d'abonnement pour avoir le droit de recevoir des appels par deux grappes de bornes : une grappe couvrant ses lieux de séjour habituel, et une grappe couvrant des lieux de séjour provisoire, non connue à l'avance;
- les numéros provisoires de bornes subsidiaires;
- la date et l'heure de fin de validité de ces numéros provisoires.

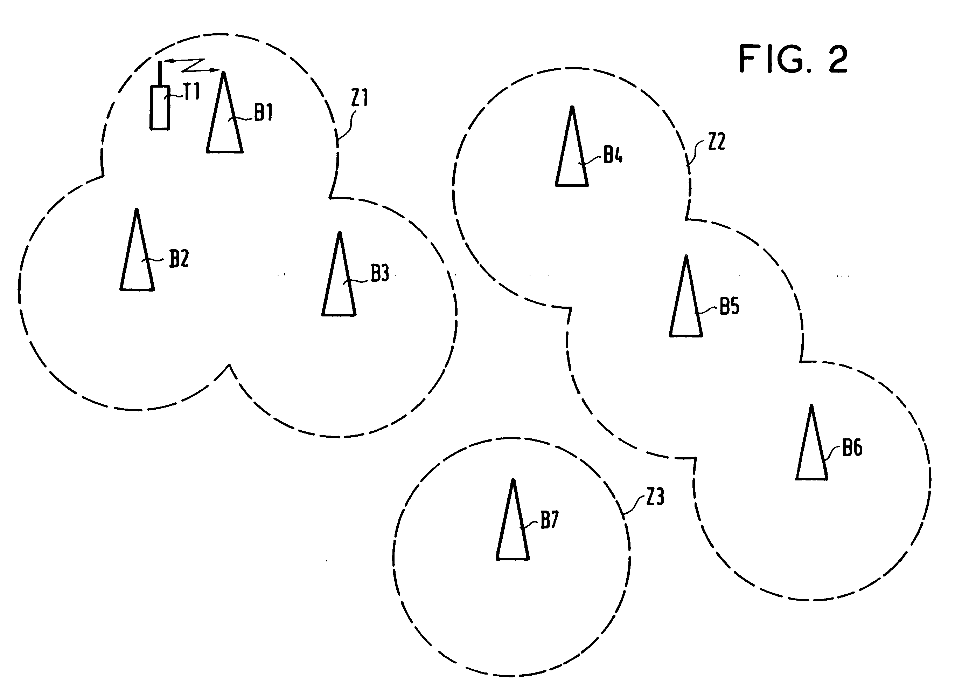

La figure 2 représente schématiquement trois zones géographiques distinctes Z1, Z2, et Z3, couvertes par trois grappes de bornes. La zone Z1 est couverte par les bornes B1, B2, B3. La zone Z2 est couverte par les bornes B4, B5, B6. La zone Z3 est couverte par une borne unique B7.

Au moment où un abonné souscrit son contrat d'abonnement au service de téléphonie sans fil, en demandant à bénéficier de l'acheminement des appels vers lui, il indique à l'exploitant commercial du réseau de téléphonie sans fil, le lieu où il est situé habituellement. L'exploitant commercial en déduit, par exemple, que cet abonné est situé habituellement à proximité de la borne B1.

L'abonné indique dans quelle mesure il se déplace. L'exploitant en déduit qu'il se déplace dans la zone Z1 couverte par la borne B1 et par les bornes B2 et B3, d'après un plan ou d'après une table répertoriant les bornes, zone par zone. Par exemple, l'abonné travaille dans un bâtiment d'un aéroport, mais il sait qu'il va occasionnellement dans deux autres bâtiments de cet aéroport.

Dans cet exemple, l'exploitant inscrit dans la base de données du point de commande de service réseau 14, qui dessert l'abonné considéré, un numéro contractuel de la borne la plus proche, constitué du numéro de la borne B1; et deux numéros de borne subsidiaire, constitués des numéros des bornes B2 et B3.

Ces informations permettent au point de commande de service réseau 14 d'acheminer un appel vers cet abonné, en essayant prioritairement d'établir une liaison avec le téléphone T1 de cet abonné par la borne B1. La borne B1 émet alors un message d'appel destiné au téléphone, T1, de cet abonné. Si la borne B1 ne reçoit aucune réponse du téléphone T1, le point de commande de service réseau 14 essaye d'établir une liaison par l'intermédiaire des bornes B2 et B3, simultanément, de façon à ne pas faire attendre trop longtemps le correspondant qui appelle.

Supposons que l'abonné a souscrit un supplément d'abonnement pour avoir le droit de recevoir des appels par une autre grappe de bornes, non connue a priori. Par exemple, l'abonné va dans la zone Z2, à proximité de la borne B4. Il utilise le clavier de son téléphone T1, pour commander la détermination automatique de la borne la plus proche de lui et la détermination automatique des bornes subsidiaires, c'est-à-dire appartenant à une grappe de bornes couvrant la zone géographique qui est déterminée par la borne la plus proche de l'abonné. Dans cet exemple, la borne B4 capte le message émis par le téléphone de l'abonné et elle indique au point de commande de service réseau 14, que l'abonné est situé à proximité de la borne B4. Le point de commande de service réseau 14 consulte une table qui lui indique que la borne B4 appartient à la zone géographique Z2 et que cette zone est couverte par les bornes B4, B5, B6. Il en déduit que les bornes B5 et B6 sont les bornes voisines à utiliser subsidiairement pour acheminer des appels vers l'abonné lorsqu'un acheminement par la borne B4 ne sera pas suivi d'une réponse de l'abonné.

Le numéro désignant la borne B4 constitue le numéro provisoire de la borne la plus proche, alors que les numéros désignant les bornes B5 et B6 constituent les numéros provisoires de bornes subsidiaires. Ces numéros provisoires sont utilisés à la place des numéros contractuels pendant un certain temps. Leur nombre peut être supérieur ou inférieur au nombre des numéros contractuels. Les numéros contractuels ne sont pas effacés de la base de données du point de commande de service réseau, lorsque des numéros provisoires sont déterminés et sont inscrits dans cette base de données.

Dans cet exemple de mise en oeuvre, les numéros provisoires ont une durée de validité limitée par deux délais. L'abonné a la possibilité d'indiquer au point de commande de service réseau 14 un délai de validité. Par ailleurs, l'exploitant du réseau fixe un autre délai, un jour par exemple, uniforme pour tous les abonnés, et qui limite la durée de validité des numéros provisoires de tous les abonnés qui n'ont pas précisé un délai. Ce délai uniforme fixé par l'exploitant permet d'éviter que des appels immobilisent les ressources du réseau alors qu'ils ne peuvent pas aboutir parce que l'abonné demandé a quitté la zone où il était situé provisoirement.

Une date et une heure de fin validité sont inscrites dans la base de données du point de commande de service réseau 14 chaque fois qu'un nouveau jeu de numéros provisoires de bornes est inscrit parmi les données d'un abonnement. La date et l'heure de fin de validité sont calculées par le point de commande de service réseau 14 en fonction de la date et de l'heure où sont déterminés ces numéros provisoires de bornes, et en fonction : soit du délai indiqué par l'abonné en utilisant son clavier de numérotation; soit du délai uniforme fixé par l'exploitant, à défaut d'un délai indiqué par l'abonné.

Dans le cas où l'abonné irait dans la zone Z3 qui est desservie par une borne unique, B7,la détermination de la borne la plus proche conclut que c'est la borne B7, et la détermination des bornes subsidiaires conclut qu'il y a aucune borne subsidiaire. Une valeur conventionnelle caractéristique d'une absence de borne subsidiaire est inscrite comme un numéro provisoire de borne subsidiaire, dans la base de données. Une date et une heure de fin de validité sont déterminées, de manière analogue au cas où il y a des bornes subsidiaires.

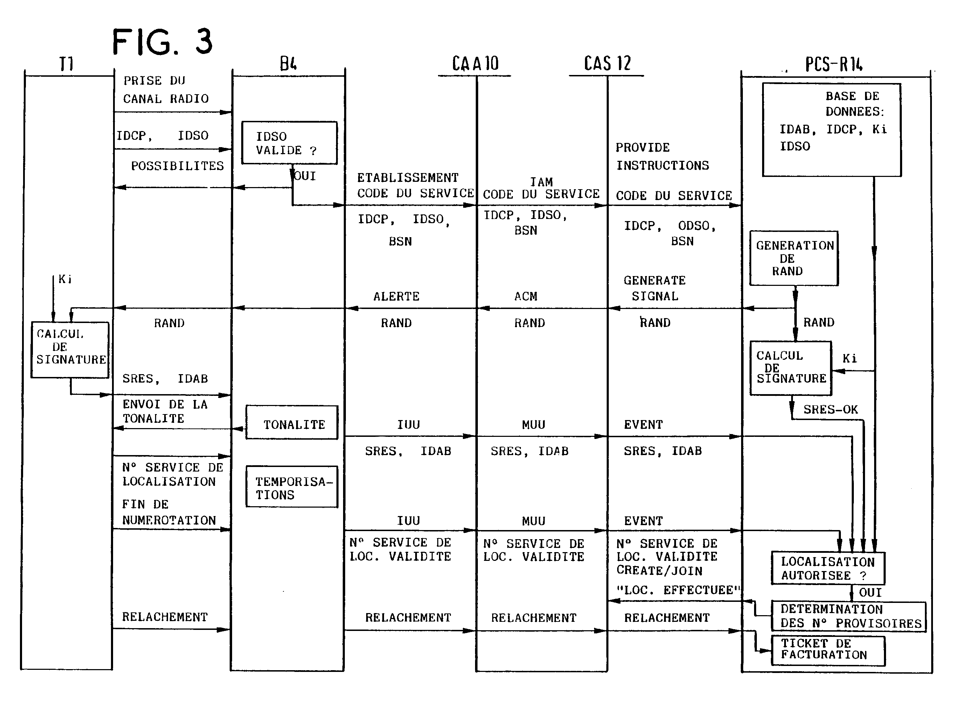

La figure 3 représente un diagramme temporel qui indique les échanges d'informations au cours de la procédure de détermination du numéro provisoire de la borne la plus proche. Le temps s'écoule du haut en bas de la figure. D'abord, l'abonné déverrouille son téléphone en tapant un code confidentiel sur le clavier de numérotation. La vérification est faite par le poste lui-même. Le déverrouillage est suivi de la prise d'un canal radio pour établir la borne B4 qui est située à proximité du téléphone T1, selon une procédure classique normalisée.

Le téléphone T1 transmet alors deux mots, IDCP et IDSO, vers la borne B4. Le mot IDSO désigne le service de téléphonie sans fil et son opérateur. Le mot IDCP désigne le téléphone T1. La borne B4 vérifie que le mot IDSO désigne un opérateur connu, puis envoie au téléphone T1 un message indiquant que l'accès au service demandé est possible.

Simultanément, la borne B4 envoie au centre à autonomie d'acheminement 10, un message noté ETABLISSEMENT, conforme au protocole n°7, et qui contient notamment un champ réservé à la signalisation d'usager à usager. Ce champ contient : un mot de code désignant le service demandé, c'est-à-dire le service de téléphonie sans fil; les mots IDCP et IDSO; et un mot BSN qui est un numéro désignant la borne B4. Le centre à autonomie d'acheminement 10 envoie un message IAM, contenant les mêmes mots, au centre d'accès au service 12. Ce dernier envoie au point de commande de service résseau 14 un message noté PROVIDE INSTRUCTIONS, contenant les mêmes mots.

Le point de commande de service réseau 14 produit alors un nombre aléatoire noté RAND et l'envoie au centre d'accès au service, 12, dans un message noté GENERATE SIGNAL, dans le champ réservé à la signalisation d'usager à usager. Le centre d'accès au service 12 envoie un message, noté ACM, au centre à autonomie d'acheminement 10, ce message contenant le nombre aléatoire RAND. Le centre à autonomie d'acheminement 10 retransmet à la borne B4 le nombre aléatoire RAND dans un message noté ALERTE. La borne B4 retransmet le nombre aléatoire RAND au téléphone T1 qui l'utilise pour calculer une signature SREF en fonction d'une clé secrète Ki qui est contenue dans le téléphone T1 et qui est propre à un abonné seulement. Le calcul de signature est réalisé au moyen d'un algorithme cryptologique classique.

La clé Ki est contenue dans un module inviolable qui est enfiché dans le téléphone T1 et qui sert à personnaliser ce téléphone T1 pour un abonné déterminé. Ce module contient en outre le mot IDAB qui désigne l'abonnement indépendamment du mot IDCP qui désigne le téléphone T1 sur lequel est enfiché le module. Le téléphone T1 envoie à la borne B4 le mot SRES constituant sa signature, et le mot IDAB. La borne B4 envoie alors au téléphone T1 une tonalité invitant le demandeur à composer un numéro demandé.

La borne B4 transmet les mots SRES et IDAB au centre à autonomie d'acheminement 10, dans un message noté IUU. Le centre à autonomie d'acheminement 10 les retransmet au centre d'accès au service 12 dans un message noté MUU. Le centre d'accès au service 12 les retransmet au point de commande de service réseau 14 dans un message noté EVENT.

L'abonné compose un numéro sur son clavier. En l'occurrence ce numéro désigne un service de localisation. Ce service de localisation est assuré par le point de commande de service réseau et il détermine le numéro provisoire de la borne la plus proche, et un ou plusieurs numéros provisoires de bornes subsidiaires s'il existe des bornes voisines. Le numéro du service est suivi de deux chiffres indiquant l'heure de fin de validité des numéros provisoires de bornes, c'est-à-dire l'heure à laquelle l'abonné quittera cette zone Z2. Eventuellement, si le séjour de l'abonné est supérieur à vingt quatre heures, il indique en outre la date de fin de validité.

La borne B4 réalise les temporisations classiques entre les chiffres du numéro. Le demandeur termine la composition du numéro par un signal de fin de numérotation qui déclenche l'envoi du numéro demandé, de la borne B4 au centre à autonomie d'acheminement 10, dans un message noté IUU. Le centre à autonomie d'acheminement 10 retransmet le numéro demandé au centre d'accès au service 12, dans un message MUU. Le centre d'accès au service 12 retransmet le numéro demandé au point de commande de service réseau 14, dans un message noté EVENT.

Le point de commande de service réseau 14 doit authentifier le demandeur et vérifier qu'il est autorisé à accéder au numéro demandé. Le point de commande de service réseau 14 détermine une signature de référence notée SRES-OK, en fonction du nombre aléatoire RAND et en fonction de la clé secrète Ki correspondant à l'abonnement désigné par IDAB, cette clé étant lue dans sa base de données. L'algorithme utilisé est le même que celui utilisé dans le téléphone T1. Il dépend de l'opérateur du service. Il est connu à partir du mot IDSO envoyé par le téléphone T1.

Le point de commande de service réseau 14 effectue plusieurs vérifications. Il vérifie que la signature SRES est identique à la signature de référence SRES-OK, pour détecter tout fraudeur qui utiliserait les mots IDAB et IDCP d'un abonné, après les avoir interceptés. Il vérifie que le mot IDAB identifiant l'abonnement, correspond à un abonnement valide. Il vérifie que IDAB correspond au mot IDCP identifiant le téléphone T1.

Le point de commande de service réseau 14 vérifie en outre que l'abonné a souscrit au service d'acheminement des appels qui lui sont destinés. Si l'une des vérifications est négative, la localisation est refusée à l'abonné. Une tonalité ou une annonce locale informe l'abonné de ce refus, puis le point de commande de service réseau 14 relâche la liaison.

Si toutes les vérifications sont positives, le point de commande de service réseau 14 écrit dans sa base de données le numéro de la borne B4 comme numéro provisoire de la borne la plus proche de l'abonné. Puis il détermine les numéros provisoires de bornes subsidiaires, B5, B6, en lisant dans une table de sa base de données les numéros des bornes appartenant à la même zone Z2 que la borne B4. Puis il inscrit les numéros de ces bornes B5, B6 dans sa base de données, comme numéros provisoires de bornes subsidiaires. Puis il détermine et inscrit dans sa base de données la date et l'heure de la fin de validité de ces numéros provisoires de bornes.

Si l'abonné a indiqué une heure de fin de validité, après avoir composé le numéro demandant l'accès au service de localisation, la date qui est inscrite est la date à laquelle est effectuée la localisation, et l'heure qui est inscrite est l'heure indiquée par l'abonné. Si l'abonné n'a pas indiqué de délais de fin de validité, le point de commande de service réseau 14 calcule une date et une heure en fonction de la date et de l'heure de la localisation en cours, et en fonction du délai de validité fixé par l'exploitant pour tous les abonnés. La date et l'heure ainsi déterminées sont inscrites dans la base de données.

Le point de commande de service réseau 14 envoie au centre d'accès au service, 12, un message CREATE/JOIN qui contient un message indiquant que la localisation de l'abonné a été effectuée. Ce message est retransmis jusqu'au téléphone T1 de l'abonné par la liaison établie précédemment. Le téléphone T1 relâche alors la liaison et le relâchement provoque dans le point de commande de service réseau, 14, l'élaboration d'un ticket de facturation. Le réseau est alors prêt à acheminer des appels vers l'abonné, alors qu'il se trouve dans la zone Z2 qui n'est pas la zone où il est situé habituellement.

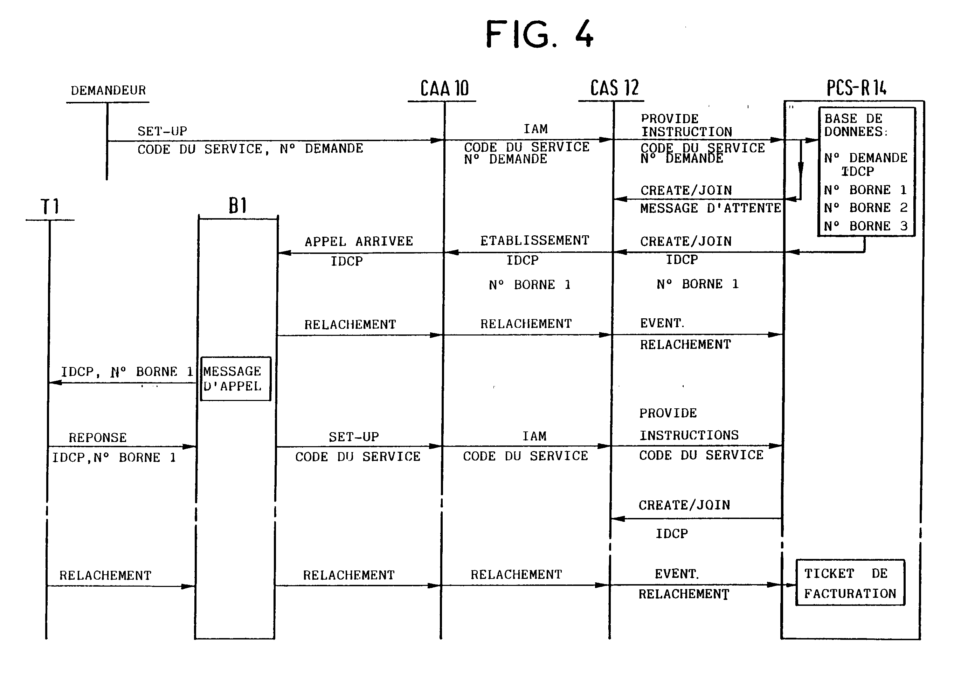

La figure 4 représente un diagramme temporel qui indique les échanges d'informations au cours de l'acheminement d'un appel destiné à cet abonné, dans le cas où cet abonné est dans sa zone habituelle Z1, en étant à proximité de la borne B1, qui est la borne habituellement la plus proche de lui. Il n'y a pas de numéro provisoire en cours de validité. Donc le point de commande de service réseau 14 achemine chaque appel par la borne B1 et subsidiairement par les bornes B2, B3 que désignent les numéros contractuels.

Le temps s'écoule du haut en bas de la figure. Le demandeur initialise cet appel en envoyant, au moyen d'un terminal téléphonique, un message noté SET/UP, au centre à autonomie d'acheminement qui le dessert, et qui est par exemple le centre à autonomie d'acheminement 10. Ce message contient un mot de code désignant le service de téléphonie sans fil, et un numéro demandé qui désigne l'abonné dans le plan de numérotation du réseau de téléphonie publique. Le centre à autonomie à acheminement, 10, transmet les informations au centre d'accès au service 12, dans un message noté IAM. Le centre d'accès au service, 12, retransmet ces informations au point de commande de service réseau, 14, dans un message noté PROVIDE INSTRUCTION. Le point de commande de service réseau, 14, commande l'émission d'un message d'attente destiné à faire patienter le demandeur, en envoyant au centre d'accès au service, 12, un message noté CREATE/JOIN.

D'autre part, il recherche dans sa base de données les informations utiles pour l'acheminement de cet appel : le numéro contractuel de borne la plus proche, les numéros contractuels des bornes subsidiaires, le numéro provisoire de borne la plus proche, les numéros de bornes subsidiaires, la date et l'heure de fin de validité de ces numéros provisoires. Il en déduit les numéros de bornes à utiliser pour acheminer cet appel : N°BORNE1, N°BORNE2, N°BORNE3, qui désignent les bornes B1, B2, B3, dans cet exemple où il n'y a pas de numéros provisoires valides.

D'autre part, la base de données fournit le mot IDCP qui désigne le téléphone T1 correspondant au numéro, du plan de numérotation, envoyé par le demandeur. Ce mot IDCP va être utilisé, à la place du numéro du plan de numérotation, pour établir une liaison à travers le réseau. Le point de commande de service réseau 14 envoie le mot IDCP et le numéro N°BORNE1 de la borne la plus proche, au centre d'accès au service, 12, dans un message noté CREATE/JOIN. Le centre d'accès au service 12 retransmet ces informations au centre à autonomie d'acheminement, 10, dans un message noté ETABLISSEMENT. Le centre à autonomie d'acheminement, 10, retransmet le mot IDCP à la borne B1, dans un message noté APPEL ARRIVEE.

La borne B1 commande alors le relâchement de la liaison par un message de relâchement acheminé jusqu'au point de commande de service, 14, par le centre à autonomie d'acheminement, 10, et par le centre d'accès au service, 12. La borne B1 émet un message d'appel à destination du téléphone T1, ce message d'appel contenant le mot IDCP et contenant son numéro de borne, N°BORNE 1.

Le téléphone T1 est en veille, en scrutant successivement les 40 canaux radio utilisés pour les communications entre les téléphones et les bornes, jusqu'à ce qu'il détecte un message d'appel contenant le mot IDCP désignant ce téléphone. Quand il a détecté un tel message, il prend le même canal radio que celui qui a acheminé le message d'appel; chaque canal étant utilisé dans les deux sens alternativement. Il envoie un message de réponse comportant : un motif caractéristique d'une réponse à un appel; le mot IDCP identifiant le téléphone T1; et le numéro N°BORNE1 désignant la borne B1. La borne B1 reçoit ce message de réponse et reconnaît son numéro de borne.

Des bornes voisines peuvent éventuellement recevoir ce message de réponse mais elles ne reconnaissent pas leur numéro de borne et par conséquent elles n'interfèrent pas avec la borne B1 en cherchant à établir une communication. La borne B1 vérifie que le téléphone qui répond envoie le même mot IDCP que celui envoyé dans le message d'appel, pour éviter une confusion, si plusieurs téléphones émettent en même temps des messages de réponse. Puis la borne B1 envoie au centre à autonomie d'acheminement, 10, un message noté SET-UP contenant un mot de code désignant le service de téléphonie sans fil, pour établir une communication, comme dans le cas d'un appel à l'initiative de l'abonné. Le centre à autonomie d'acheminement, 10, envoie au centre d'accès au service, 12, un message IAM contenant le mot de code désignant le service. Le centre d'accès au service, 12, envoie un message noté PROVIDE INSTRUCTIONS contenant le mot de code désignant le service, au point de commande de service réseau, 14. Ce dernier télécommande l'établissement d'une liaison en envoyant un message noté CREATE/JOIN, contenant le mot IDCP désignant le téléphone T1, au centre d'accès au service,12.

Un peu plus tard, lorsque la communication est terminée, l'abonné titulaire du téléphone T1 provoque le relâchement de la liaison. Le téléphone T1 envoie un message commandant un relâchement de la liaison et la borne B1 retransmet un ordre de relâchement, par l'intermédiaire : du centre à autonomie d'acheminement, 10; du centre d'accès au service 12. Le point de commande de service réseau 14 élabore alors un ticket de facturation.

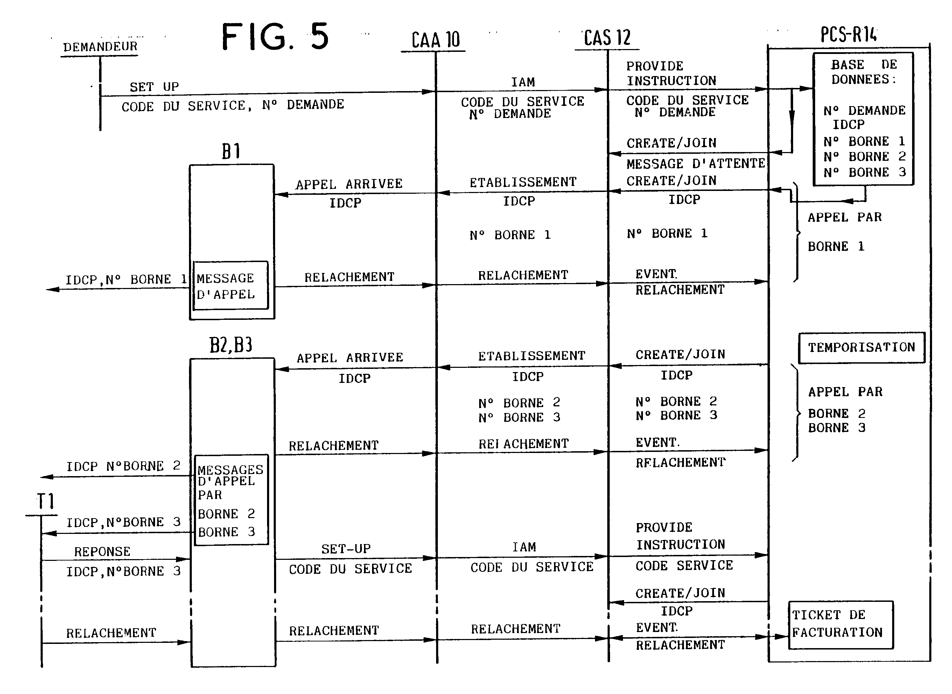

La figure 5 représente un diagramme temporel montrant les échanges d'informations dans le cas où le téléphone T1 ne répond pas à la borne B1 parce que l'abonné s'est déplacé dans la zone Z1 et se trouve près de la borne B3. Le diagramme est le même que celui de la figure 4 jusqu'au relâchement de la liaison établie entre le point de commande de service réseau, 14, et la borne B1 pour émettre un message d'appel. En l'absence de réponse de l'abonné, le point de commande de service réseau, 14, attend pendant un délai déterminé par un programme de temporisation, puis il établit une liaison avec les bornes B2 et B3 simultanément, ces bornes étant désignées par les numéros de bornes subsidiaires, N°BORNE2 et N°BORNE3.

Les bornes B2 et B3 sont commandées de manière analogue à ce qui a été décrit pour la borne B1, de telle sorte qu'elles émettent des messages d'appel comportant le mot IDCP et comportant respectivement leurs numéros N°BORNE2 et N°BORNE3. Dans cet exemple, le message d'appel émis par la borne B2 n'est pas reçu par le téléphone T1. Par contre, le message d'appel émis par la borne B3 est reçu, et il déclenche l'émission d'un message de réponse contenant à la fois le mot IDCP identifiant le téléphone T1, et le numéro N°BORNE3 de la borne ayant émis le message d'appel. La borne B3 reçoit ce message de réponse et vérifie que c'est bien une réponse qui lui est destinée et que c'est bien le téléphone correspondant au mot IDCP envoyé qui répond. Ces vérifications étant positives, la borne B3 demande l'établissement d'une communication, de la manière décrite précédemment pour la figure 4. La liaison est relâchée de la même manière aussi.

Considérons le cas où cet abonné est hors de sa zone habituelle Z1. Il a demandé au service de localisation de déterminer le numéro provisoire de la borne la plus proche, et des numéros provisoires de bornes subsidiaires. Supposons que leurs délais de validité n'a pas encore expiré. Par exemple, le numéro provisoire de la borne la plus proche est le numéro désignant la borne B4; et les numéros provisoires de bornes subsidiaires sont les numéros désignant les bornes B5 et B6. Les échanges d'informations pour acheminer un appel vers l'abonné sont alors analogues à ceux décrits ci-dessus, en référence aux figures 4 et 5, mais les numéros : N°BORNE 1, N°BORNE 2, N°BORNE 3, sont alors constitués par les numéros désignant les bornes B4, B5, B6 respectivement.

## Revendications

1. Procédé d'acheminement d'un appel vers un abonné à un service de téléphonie sans fil, ce service étant assuré par un réseau comportant :
- un réseau de distribution (1) constitué par des bornes fixes (B1,....,Bp) et des téléphones numériques (T1,....,Tn), sans fil, reliés par radio aux bornes;
- un réseau public commuté (2), numérique, à intégration de services, chaque borne lui étant reliée notamment par un canal de signalisation d'usager à usager (D);
- des points de commande de service réseau (14, 15), reliés au réseau commuté (2) et comportant chacun une base de données d'abonnés au service de téléphonie sans fil, et un dispositif logique de traitement d'appels;
- un point de commande de service gestion (16) comportant une base de données de référence;
caractérisé en ce qu'il consiste, pour chaque abonné bénéficiant de l'acheminement des appels vers lui, à :
- lui affecter un numéro (N°DEMANDE) du plan de numérotation du réseau public (2);
- déterminer un numéro (N°BORNE 1) appelé numéro de la borne la plus proche, désignant une borne (B1) qui est censée être la plus proche de l'abonné;
- inscrire le numéro de la borne la plus proche (N°BORNE 1) dans la base de données du point de commande de service réseau (14) desservant ledit abonné, en l'associant au numéro (N°DEMANDE) du plan de numérotation, et à un mot (IDCP) identifiant le téléphone dudit abonné;
et en ce que pour chaque appel à acheminer vers un abonné demandé, il consiste à :
- lire dans la base de données du point de commande de service réseau (14) desservant ledit abonné, le numéro de la borne la plus proche (N°BORNE 1), et le mot (IDCP) identifiant le téléphone dudit abonné;
- envoyer ce mot (IDCP) dudit point de commande de service réseau (14) à la borne (B1) désignée par le numéro de borne la plus proche (N°BORNE 1), par le canal de signalisation d'usager à usager (D) de ladite borne; puis relâcher cette liaison;
- émettre par ladite borne (B1) au moins un message d'appel contenant ce mot (IDCP) et le numéro de ladite borne (N°BORNE1);
- recevoir le message d'appel dans le téléphone (T1) de l'abonné, reconnaître le mot (IDCP) identifiant le téléphone, et alerter l'abonné;
- établir une liaison entre l'abonné et ladite borne, en envoyant du téléphone (T1) de l'abonné vers ladite borne, un message de réponse contenant le mot (IDCP) identifiant le téléphone, et contenant le numéro de ladite borne (N°BORNE 1).

2. Procédé selon la revendication 1, caractérisé en ce qu'il consiste, en outre, à déterminer, puis écrire dans la base de données du point de commande de service réseau (14) desservant ledit abonné, au moins un autre numéro (N°BORNE 2, N° BORNE 3), dit numéro de borne subsidiaire, désignant une borne (B2, B3) qui est susceptible d'être la plus proche dudit abonné lorsqu'il n'est pas à proximité de la borne qui est censée être la plus proche (B1);
et en ce que, si l'abonné demandé ne répond pas à des messages d'appel émis par la borne (B1) désignée par le numéro de la borne la plus proche (N°BORNE 1), il consiste en outre à :
- lire dans la base de données dudit point de commande de service réseau (14), chaque numéro de borne subsidiaire (N°BORNE 2, N°BORNE 3);
- envoyer le mot (IDCP) identifiant le téléphone de l'abonné, dudit point de commande de service réseau (14) à chaque borne subsidiaire (B2, B3), par le canal de signalisation d'usager à usager (D) reliant cette borne au réseau (2);
- émettre par chacune des bornes subsidiaires (B2, B3) parallèlement, au moins un message d'appel contenant le mot identifiant le téléphone (IDCP) et le numéro de la borne émettant le message (N°BORNE2, N°BORNE3).

3. Procédé selon la revendication 2, caractérisé en ce que, pour déterminer le numéro de la borne la plus proche (N°BORNE 1) et au moins un numéro (N°BORNE 2, N°BORNE 3) de borne subsidiaire, il consiste à faire déterminer un numéro dit numéro contractuel de la borne la plus proche, et au moins un numéro dit numéro contractuel de borne subsidiaire, par l'exploitant du réseau de téléphonie sans fil, au moment où l'abonné souscrit son contrat d'abonnement.

4. Procédé selon la revendication 2, caractérisé en ce que, pour déterminer le numéro de la borne la plus proche, et au moins un numéro de borne subsidiaire, s'il en existe après un déplacement dudit abonné vers une zone non connue à l'avance et couverte par une ou plusieurs bornes, il consiste à :
- envoyer du téléphone (T1) dudit abonné vers le point de commande de service réseau (14) desservant cet abonné, par l'intermédiaire d'une borne (B4) située à proximité de l'abonné, un message demandant la détermination d'un numéro dit numéro provisoire de la borne la plus proche, et d'au moins un numéro dit numéro provisoire de borne subsidiaire, s'il en existe;
- adjoindre à ce message, au moment où il transite par la borne (B4), un numéro (BSN) désignant cette borne;
- authentifier le téléphone (T1) ayant émis ledit message;
- écrire le numéro de ladite borne (BSN), dans la base de données dudit point de commande de service réseau (14) en l'associant au numéro du plan de numérotation (N°ABONNE) et au mot (IDCP) désignant le téléphone de l'abonné, pour constituer le numéro provisoire de la borne la plus proche;
- déterminer, par une lecture dans une table de la base de données dudit point de commande de service réseau (14), au moins un numéro désignant une borne (B5, B6) voisine de la borne censée être la plus proche de l'abonné, s'il en existe;
- écrire dans la base de données dudit point de commande de service réseau (14), chaque numéro lu dans la table, en l'associant au numéro du plan de numérotation et au mot (IDCP) désignant le téléphone, chaque numéro lu constituant un numéro provisoire de borne subsidiaire;
- prédéterminer, puis écrire dans la base de données dudit point de commande de service réseau, une date et une heure de fin de validité des numéros provisoires, en les associant au numéro du plan de numérotation, et au mot (IDCP) désignant le téléphone;
en ce que, pour lire le numéro de la borne la plus proche, il consiste à :
- lire le numéro contractuel et le numéro provisoire de la borne la plus proche; et lire la date et l'heure de fin de validité;
- prendre pour numéro de borne la plus proche, le numéro provisoire de borne la plus proche, si la date et l'heure de fin de validité ne sont pas dépassées; sinon prendre le numéro contractuel;
et en ce que pour lire chaque numéro de borne subsidiaire, il consiste à :
- lire chaque numéro contractuel et chaque numéro provisoire de borne subsidiaire; et lire la date et l'heure de fin de validité;
- prendre pour numéro de borne subsidiaire, chaque numéro provisoire de borne subsidiaire, si la date et l'heure de fin de validité ne sont pas dépassées; sinon prendre chaque numéro provisoire.

5. Procédé selon la revendication 4, caractérisé en ce que pour prédéterminer la date et l'heure de la fin de validité des numéros provisoires de borne, il consiste à :
- saisir un délai au moyen du clavier de numérotation équipant le téléphone de l'abonné, après avoir demandé la détermination des numéros provisoire de borne;
- transmettre ce délai, du téléphone de l'abonné (T1) audit point de commande de service réseau (14);
- déterminer la date et l'heure de la fin de validité des numéros provisoires, en fonction de ce délai.

6. Procédé selon la revendication 4, caractérisé en ce que, pour prédéterminer la date et l'heure de la fin de validité des numéros provisoires de bornes, il consiste à :
- fixer un délai de validité uniforme pour tous les abonnements;
- calculer la date et l'heure de fin de validité des numéros provisoires de bornes pour chaque abonnement, en fonction de ce délai uniforme et en fonction de l'instant où sont déterminés les dits numéros provisoires.

## Patentansprüche

1. Verfahren zur Durchschaltung eines Anrufs zu einem Teilnehmer eines Mobiltelefonnetzes, das enthält:
- ein Verteilungsnetz (1), bestehend aus ortsfesten Relaisstationen (B1, ... Bp) und digitalen Funktelefonen (T1, ... Tn), die mit den Relaisstationen über Funk verbunden sind,
- ein öffentliches, drahtgebundenes digitales Telefonnetz mit Integration von Diensten, wobei jede Relaisstation an das Netz insbesondere über einen Benutzer-Benutzer-Signalisationskanal (D) angeschlossen ist,
- Netz-Dienststeuerpunkte (14, 15), die an das drahtgebundene Netz (2) angeschlossen sind und je eine Datenbasis der Teilnehmer des Mobiltelefonnetzes sowie eine logische Vorrichtung zur Bearbeitung von Anrufen aufweisen,
- einen Verwaltungs-Dienststeuerpunkt (16) mit einer Referenzdatenbasis,
dadurch gekennzeichnet, daß das Verfahren für jeden Teilnehmer, der ein Recht hat, daß Anrufe auf ihn durchgeschaltet werden, darin besteht,
- ihm eine Nummer (N°DEMANDE) der Nummernwahllebene des öffentlichen Netzes (2) zuzuteilen,
- eine Nummer der nächstliegenden Relaisstation (N°BORNE1) zu bestimmen, die eine Relaisstation (B1) bezeichnet, die als dem Teilnehmer nächstliegend betrachtet wird,
- die Nummer der nächstliegenden Relaisstation (N°BORNE1) in die Datenbasis des Netz-Dienststeuerpunkts (14) einzuschreiben, der diesen Teilnehmer betreut, ergänzt um die Nummer (N°DEMANDE) der Nummernwahlebene und um ein Wort (IDCP), das das Telefon dieses Teilnehmers bezeichnet, und daß für jeden an einen gerufenen Teilnehmer durchzuschaltenden Anruf das Verfahren darin besteht,
- aus der Datenbasis des Netz-Dienststeuerpunkts (14), der diesen Teilnehmer betreut, die Nummer der nächstliegenden Relaisstation (N°BORNE1) und das das Telefon dieses Teilnehmers identifizierende Wort (IDCP) auszulesen,
- dieses Wort (IDCP) aus dem Netz-Dienststeuerpunkt (14) der durch die Nummer der nächstliegenden Relaisstation (N°BORNE1) bezeichneten Relaisstation (B1) über den Benutzer-Benutzer-Signalisationskanal (D) der Relaisstation auszusenden und dann diese Verbindung aufzulösen,
- durch die Relaisstation (B1) mindestens eine Rufnachricht mit diesem Wort (IDCP) und der Nummer dieser Relaisstation (N°BORNE1) auszusenden,
- die Rufnachricht in dem Telefon (T1) des Teilnehmers zu empfangen, das dieses Telefon identifizierende Wort (IDCP) zu erkennen und den Teilnehmer aufmerksam zu machen,
- eine Verbindung zwischen dem Teilnehmer und der Relaisstation herzustellen, indem vom Telefon (T1) des Teilnehmers an die Relaisstation eine Antwortnachricht gesendet wird, die das das Telefon identifizierende Wort (IDCP) und die Nummer der Relaisstation (N°BORNE1) enthält.

2. Verfahren nach Anspruch 1, dadurch gekennzeichnet, daß es weiter darin besteht, mindestens eine weitere Nummer (N°BORNE2, N°BORNE3), die Nummer von Ersatzrelaisstationen genannt werden, und eine Relaisstation (B2, B3) bezeichnen, die die dem Teilnehmer nächstliegende sein kann, wenn er sich nicht in der Nähe der Relaisstation befindet, die als nächstliegende betrachtet wird (B1), und dann in die Datenbasis des Netz-Dienststeuerpunkts (14) einzutragen, die diesen Teilnehmer betreut,
und daß das Verfahren in dem Fall, daß der gerufene Teilnehmer auf die von der als nächstliegende Relaisstation (N°BORNE1) bezeichneten Relaisstation (B1) ausgesendeten Rufnachrichten nicht antwortet, darin besteht,
- aus der Datenbasis des Netz-Dienststeuerpunkts (14 jede Nummer von Ersatzrelaisstationen (N°BORNE2, N°BORNE3) auszulesen,
- das das Telefon des Teilnehmers identifizierende Wort (IDCP) vom Netz-Dienststeuerpunkt (14) an jede Ersatzrelaisstation (B2, B3) über den Benutzer-Benutzer-Signalisationskanal (D) auszusenden, der diese Relaisstation mit dem drahtgebundenen Netz (2) verbindet,
- durch jede der Ersatzrelaisstationen (B2, B3) parallel mindestens eine Rufnachricht mit d,e das Telefon IDCP identifizierenden Wort und der Nummer der die Nachricht aussendenden Relaisstation (N°BORNE2, N°BORNE3) auszusenden.

3. Verfahren nach Anspruch 2, dadurch gekennzeichnet, daß zur Bestimmung der Nummer der nächstliegenden Relaisstation (N°BORNE1) und mindestens einer Nummer (N°BORNE2, N°BORNE3) von Ersatzrelaisstationen das Verfahren darin besteht, eine vertragsgemäße Nummer der nächstliegenden Relaisstation und mindestens eine vertragsgemäße Nummer einer Ersatzrelaisstation durch den Betreiber des Mobiltelefonnetzes bestimmen zu lassen, wenn der Teilnehmer seinen Abonnementvertrag abschließt.

4. Verfahren nach Anspruch 2, dadurch gekennzeichnet, daß zur Bestimmung der Nummer der nächstliegenden Relaisstation und mindestens einer Nummer einer Ersatzrelaisstation, sofern sie existiert, nach der Reise des Teilnehmers in eine vorab unbekannte Zone, die von einer oder mehreren Relaisstationen überdeckt wird, das Verfahren darin besteht,
- vom Telefon (T1) des Teilnehmers zum Netz-Dienststeuerpunkt (14), der diesen Teilnehmer betreut, über eine in der Nähe des Teilnehmers liegende Relaisstation (B4) eine Nachricht auszusenden, die die Bestimmung einer provisorischen Nummer der nächstliegenden Relaisstation und mindestens eine provisorische Nummer von einer Ersatzrelaisstation beantragt, sofern sie existiert,
- diese Nachricht beim Durchgang durch die Relaisstation (B4) um eine Nummer (BSN) zur Bezeichnung dieser Relaisstation zu ergänzen,
- das die Nachricht aussendende Telefon (T1) zu identifizieren,
- die Nummer der Relaisstation (BSN) in die Datenbasis des Netz-Dienststeuerpunkts (14) einzutragen und mit der Nummer der Nummernwahlebene (N°ABONNE) und dem Wort (IDCP) zu verbinden, das das Telefon des Teilnehmers bezeichnet, um die provisorische Nummer der nächstliegenden Relaisstation zu bilden,
- durch Auslesen aus einer Tabelle in der Datenbasis des Netz-Dienststeuerpunkts (14) mindestens eine Nummer zu bestimmen, die eine Relaisstation (B5, B6) in der Nähe der als dem Teilnehmer nächstliegend betrachteten Station bezeichnet, sofern sie existiert,
- in die Datenbasis des Netz-Dienststeuerpunkts (14) jede aus der Tabelle ausgelesene Nummer zusammen mit der Nummer der Nummernwahlebene und dem das Telefon bezeichnenden Wort (IDCP) einzutragen, wobei jede gelesene Nummer eine provisorische Ersatzrelaisstationsnummer bildet,
- Datum und Uhrzeit für das Ende der Gültigkeit der provisorischen Nummern zu bestimmen und dann in die Datenbasis einzutragen, indem sie der Nummer der Nummernwahlebene und dem das Telefon bezeichnenden Wort (IDCP) hinzugefügt werden, daß das Verfahren zum Lesen der Nummer der nächstliegenden Relaisstation darin besteht,
- die vertragsgemäße Nummer und die provisorische Nummer der nächstliegenden Relaisstation sowie das Datum und die Uhrzeit des Endes der Gültigkeit zu lesen,
- als Nummer der nächstliegenden Relaisstation die provisorische Nummer der nächstliegenden Relaisstation zu verwenden, wenn Datum und Zeit des Endes der Gültigkeit nicht überschritten sind, und ansonsten die vertragsgemäße Nummer zu verwenden,
und daß das Verfahren zum Lesen jeder Nummer einer Ersatzrelaisstation darin besteht,
- jede vertragsgemäße Nummer und jede provisorische Nummer einer Ersatzrelaisstation sowie Datum und Uhrzeit des Endes der Gültigkeit zu lesen,
- als Nummer der Ersatzrelaisstation jede provisorische Ersatzrelaisstationsnummer zu verwenden, wenn Datum und Uhrzeit des Endes der Gültigkeit nicht überschritten sind, ansonsten jede provisorische Nummer zu verwenden.

5. Verfahren nach Anspruch 4, dadurch gekennzeichnet, daß es zur Bestimmung von Datum und Uhrzeit des Endes der Gültigkeit der provisorischen Relaisstationsnummer darin besteht,
- eine Frist mit Hilfe der Nummernwahltastatur des Telefons des Teilnehmers zu erfassen, nachdem die Bestimmung der provisorischen Relaisstationsnummer beantragt worden war,
- diese Frist vom Telefon des Teilnehmers (T1) an den Netz-Dienststeuerpunkt (14) zu übertragen,
- abhängig von dieser Frist das Datum und die Uhrzeit des Endes der Gültigkeit der provisorischen Nummer zu bestimmen.

6. Verfahren nach Anspruch 4, dadurch gekennzeichnet, daß es zur Bestimmung von Datum und Uhrzeit des Endes der Gültigkeit der provisorischen Relaisstationsnummer darin besteht,
- eine einheitliche Gültigkeitsfrist für alle Abonnements festzulegen,
- Datum und Uhrzeit des Endes der Gültigkeit der provisorischen Relaisstationsnummern für jedes Abonnement abhängig von dieser einheitlichen Frist und ausgehend vom Zeitpunkt zu berechnen, an dem die provisorischen Nummern bestimmt worden sind.

## Claims

1. Method of routing a call to a subscriber to a cordless telephone service provided by a network comprising:
- a distribution network (1) comprising fixed stations (B1...Bp) and cordless digital telephones (T1...Tn) linked to said fixed stations by radio;
- an integrated services digital public switched telephone network (2) to which each fixed station is connected by a user to user signalling channel (D);
- service control points (14, 15) connected to said public switched telephone network (2) and each comprising a cordless telephone subscriber database and a call processing logic device;
- a service management system (16) comprising a reference database;
characterised in that it consists in, for each subscriber entitled to the call routing service:
- assigning that subscriber a number (CALLED No) from the public switched telephone network (2) numbering plan;
- determining a nearest fixed station number (FSNo1) designating a fixed station (B1) which is deemed to be that nearest the subscriber;
- writing the nearest fixed station number (FSNo1) into the database of said service control point (14) serving said subscriber in association with said numbering plan number (CALLED No) and a word (IDCP) identifying the telephone of said subscriber;
and in that, for each call to be routed to a called subscriber, it consists in:
- reading in the database of the service control point (14) serving said subscriber said nearest fixed station number (FSNo1) and said word (IDCP) identifying said telephone of said subscriber;
- sending said word (IDCP) from said service control point (14) to the fixed station (B1) designated by said nearest fixed station number (FSNo1) over said user to user signalling channel (D) of said fixed station and then clearing down said link;
- sending from said fixed station (B1) at least one call message containing said word (IDCP) and the number (FSNo1) of said fixed station;
- receiving said call message in said telephone (T1) of said subscriber, recognising said word (IDCP) identifying said telephone and alerting said subscriber; and
- setting up a link between said subscriber and said fixed station by sending from said telephone (T1) of said subscriber to said fixed station a response message containing said word (IDCP) identifying said telephone and containing the number (FSNo1) of said fixed station.

2. Method according to claim 1 characterised in that it further consists in determining and then writing into said database of said service control point (14) serving said subscriber at least one subsidiary fixed station number (FSNo2, FSNo3) designating a fixed station (B2, B3) likely to be that nearest said subscriber if the latter is not near the fixed station (B1) deemed to be the nearest;
and in that, if the called subscriber does not respond to call messages sent by said fixed station (B1) designated by said nearest fixed station number (FSNo1), it further consists in:
- reading in said database of said service control point (14) each subsidiary fixed station number (FSNo2, FSNo3);
- sending said word (IDCP) identifying said telephone of said subscriber from said service control point (14) to each subsidiary fixed station (B2, B3) over said user to user signalling channel (D) connecting said fixed station to said network (2);
- sending via each of said subsidiary fixed stations (B2, B3) in parallel at least one call message containing said word (IDCP) identifying said telephone and said number (FSNo2, FSNo3) of said fixed station sending said message.

3. Method according to claim 2, characterised in that, to determine said nearest fixed station number (FSNo1) and at least one subsidiary fixed station number (FSNo2, FSNo3), determining a nearest fixed station subscription agreement number and at least one subsidiary fixed station subscription agreement number by the operator of said cordless telephone network when said subscriber enters into a subscription agreement.

4. Method according to claim 2, characterised in that, to determine the nearest fixed station number and at least one subsidiary fixed station number, if any, after said subscriber moves into an area that is not predefined and is covered by one or more fixed stations, it consists in:
- sending from said telephone (T1) of said subscriber to said service control point (14) serving said subscriber via a fixed station (B4) near said subscriber a message requesting determination of a temporary nearest fixed station number and at least one temporary subsidiary fixed station number, if any;
- adding to said message when it passes through said fixed station (B4) a number (BSN) designating said fixed station;
- authenticating the telephone (T1) which sent said message;
- writing the number (BSN) of said fixed station into said database of said service control point (14) associated with said numbering plan number and said word (IDCP) designating said telephone of said subscriber to constitute said temporary nearest fixed station number;
- reading a table of said database of said service control point (14) to determine at least one number designating a fixed station (B5, B6) near said fixed station deemed to be that nearest said subscriber;
- writing into said database of said service control point (14) each number read from said table in association with said numbering plan number and said word (IDCP) designating said telephone, each number read constituting a temporary subsidiary fixed station number;
- predefining and then writing into said database of said service control point a temporary number expiry date and time associated with said numbering plan number and said word (IDCP) designating said telephone;
and, to read said nearest fixed station number:
- reading said subscription agreement number and said temporary nearest fixed station number and said expiry date and time;
- adopting as said nearest fixed station number said temporary nearest fixed station number if said expiry date and time have not been passed or said subscription agreement number otherwise;
- and, to read each subsidiary fixed station number:
- reading each subscription agreement number and each temporary subsidiary fixed station number and said expiry date and time;
- adopting as a subsidiary fixed station number each temporary subsidiary fixed station number if said expiry date and time have not been passed or each temporary number otherwise.

5. Method according to claim 4, characterised in that, to determine said expiry date and time of said temporary fixed station numbers, it consists in:
- entering a time period via the dialing keypad of said telephone of said subscriber after requesting determination of temporary fixed station numbers;
- transmitting said time period from said telephone (T1) of said subscriber to said service control point (14); and
- determining said expiry date and time of said temporary numbers from said time period.

6. Method according to claim 4, characterised in that, to determine said expiry date and time of said temporary fixed station numbers, it consists in:
- setting a uniform expiry time period for all subscriptions; and
- calculating said expiry date and time of said temporary fixed station numbers for each subscription according to said uniform time period and the time at which said temporary numbers are determined.
